# EUROPÄISCHE PATENTSCHRIFT

(11) **EP 0 766 487 B1**
(45) Veröffentlichungstag und Bekanntmachung des Hinweises auf die Patenterteilung: **16.11.2005**
(21) Anmeldenummer: 96115113.1
(22) Anmeldetag: 20.09.1996
(51) Int. Cl.: H04Q 3/545

(54) **Verfahren zum Steuern einer Vermittlungsstelle, Vermittlungsstelle und Kommunikationssystem**
Method for controlling an exchange, exchange and communication system
Procédé pour commander un central de commutation, central de commutation et système de communication

(30) Priorität: 30.09.1995 DE 19536650
(43) Veröffentlichungstag der Anmeldung: 02.04.1997
(73) Patentinhaber: ALCATEL, 75008 Paris (FR)
(72) Erfinder: Daase, Detlef, Dr., 12205 Berlin (DE); Stahl, Bernd, 70139 Stuttgart (DE); Legat, Karl-Heinz, 71272 Renningen (DE)
(74) Vertreter: Brose, Gerhard

(56) Entgegenhaltungen:
- EP-A- 0 295 198
- US-A- 4 527 012
- US-A- 4 993 017
- US-A- 5 448 631
- LE GAC M L ET AL: "UNE NOUVELLE ETAPE POUR ALCATEL E10: CONNEXION ET COMMANDE OCB283" COMMUTATION ET TRANSMISSION, Bd. 13, Nr. 2, 1. Januar 1991 (1991-01-01), Seiten 69-76, XP000235427 PARIS, FR ISSN: 0242-1283

## Beschreibung

Die Erfindung betrifft ein Verfahren zum Steuern einer Vermittlunsstelle nach dem Oberbegriff von Anspruch 1 sowie eine Vermittlungsstelle und ein Kommunikationssystem nach dem Oberbegriff von Anspruch 7 bzw. 10.

Im Laufe der Zeit haben sich zwei Grundtypen von Vermittlungsstellen entwickelt. Zum einen Vermittlungsstellen mit einer zentralen Steuerungs-Architektur und zum anderen Vermittlungsstellen mit einer eher verteilten Steuerungs-Architektur. Die Erfindung geht nun sowohl von dem einen als auch dem anderen Grundtyp von Vermittlungsstelle aus.

Eine Vermittlungsstelle mit zentraler Steuerung wird beispielsweise in dem Artikel "EWSD morgen - zukunftsichere Kommunikation" aus der Zeitschrift "telecom report", Band 11, Heft 6, 1988, von Nick Skaporda beschrieben.

Eine Vermittlungsstelle enthält hier ein digitales Koppelnetz, Anschlußgruppen für den Anschluß von Teilnehmern und einen zentralen Koordinationsprozessor. Die Vermittlungsfunktionen der Vermittlungsstelle werden hierbei von Gruppenprozessoren in den Anschlußgruppen und von dem zentralen Koordinationsprozessor erbracht. Bei diesem handelt es sich um ein sehr leistungsfähiges Mehrprozessorsystem, das die zentraleren Steuerungs- und Vermittlungsfunktionen ausführt. Sowohl bei den Gruppenprozessoren als auch bei dem Koordinationsprozessor handelt es sich hierbei um Rechnersysteme, die speziell für die besonderen Anforderungen in einer Vermittlungsstelle hin entwickelt wurden. Diese bilden zusammen mit einem speziellen Betriebssystem eine System-Plattform für die Anwendungs-Software, die in der Programmiersprache CHILL, der Programmiersprache der CCITT für Vermittlungsfunktionen, geschrieben ist.

Eine Vermittlungsstelle mit verteilter Steuerungsarchitektur ist beispielsweise in dem Artikel "System 12 - Konzeption und Realisierung der Software", aus der Zeitschrift "Elektrisches Nachrichtenwesen", Band 56, Nummer 2/3, 1989, Seite 173 - 183, von L. Katzschner et al. beschrieben.

Die Vermittlungsstelle besteht aus einem digitalen Koppelnetz und einer Vielzahl von Rechner-Modulen, die dem Anschluß von Teilnehmern und der Steuerung der Vermittlungsstelle dienen. Die Rechner-Module arbeiten mit einem verteilten, speziell für die Anforderungen in einer Vermittlungsstelle entwickelten Echtzeit-Betriebssystem, das eine Vielzahl von Software-Modulen verwaltet. Diese Software-Module sind ebenfalls in der Programmiersprache CHILL geschrieben und über die Rechnermodule verteilt. Durch ihr Zusammenwirken werden die Vermittlungsfunktionen der Vermittlungsstelle erbracht.

Bei beiden Typen von Steuerungen stellt sich das Problem, daß die von der Steuerung zu erbringenden Funktionen immer umfangreicher und komplexer werden. Dies stellt zum einen immer höhere Anforderungen an die Rechnerleistung der Steuerungen und erfordert zum anderen einen ständig höheren Software-Entwicklungsaufwand.

Ein modular strukturiertes ISDN-Kommunikationssystem ist auch in US 4,993,017 offenbart. Das Kommunikationssystem weist einen Systemprozessor auf, der von einem Multitasking-Echtzeitbetriebsystem verwaltet wird. Da dieses Betriebssystem dem Systemprozessor nur systeminterne Funktionsprogramme zuteilen kann, ist ein Softwareapplikationsmodul mit einem Teilnehmerbetriebssystem vorgesehen, so dass derselbe Prozessor von beiden Betriebssystemen verwaltet wird.

Der Erfindung liegt nun die Aufgabe zugrunde, den Aufwand für die Steuerung von Vermittlunststellen zu verringern.

Die Aufgabe wird gelöst durch ein Verfahren zur Steuerung einer Vermittlungsstelle nach der Lehre von Anspruch 1 sowie durch eine Vermittlungsstelle und ein Kommunikationssystem nach der Lehre von Anspruch 7 bzw. 10.

Der Erfindung liegt die Erkenntnis zugrunde, daß der Entwicklungs- und Testaufwand für Programme, deren Ablauf von einem Universal-Betriebssystem verwaltet wird, erheblich geringer ist.

Der Grundgedanke der Erfindung ist, die Steuerung einer Vermittlunsstelle aus zwei unterschiedlichen Steuereinheiten aufzubauen, von denen die eine auf einer Universal-Betriebssystem-Plattform basier und die andere auf einer auf die Durchführung von Vermittlungsfunktionen spezialisierten Betriebssystem-Plattform basiert. Die Funktionen der Vermittlungsstelle werden hierbei von Anwendungsprogrammen erbracht, die der einen oder der anderen Betriebssystem-Plattform zugeordnet sind und auf dieser Plattform ablaufen. Für die Erbringung von Vermittlungsfunktionen arbeiten Anwendungsprogramme beider Steuereinheiten zusammen.

Vorteilhafte Ausgestaltungen der Erfindung sind den Unteransprüchen zu entnehmen.

Die Erfindung hat den Vorteil, daß sich die Komplexität der Anwendungsprogramme verringert, da nicht alle Anwendungsprogramme auf einer auf die Durchführung von Vermittlungsfunktionen spezialisierten Plattform ablaufen müssen. Es ist so möglich, nur diejenigen Anwendungsprogramme oder Programmteile solch einer Plattform zuzuordnen, die diese spezielle Programmumgebung auch wirklich benötigen.

Dadurch verringern sich auch die Anforderungen an die Rechnerleistung der Steuereinheit, insbesondere an die Steuereinheit der Steuerung, die auf der spezialisierten Plattform basiert. Hierbei ist zu beachten, daß die Bereitstellung von Rechnerleistung auf einer Universal-Systemplattform günstiger als deren Bereitstellung auf einer spezialisierten, proprietären Systemplattform ist.

Ein weiterer Vorteil der Erfindung ist, daß für solche Universal-System-Plattformen eine große Zahl von vorgefertigten Programm-Modulen bereitstehen, die so auch für die Steuerungsfunktionen von Vermittlungsstellen verwendet werden können. Der Entwicklungs- und Testaufwand verringert sich so erheblich.

Weitere Vorteile der Erfindung ergeben sich in Bezug auf den Anschluß der Vermittlungsstelle an das Netzwerk-Managementsystem. Netzwerk-Managementsysteme basieren in der Regel auf Universal-System-Plattformen.

Eine System-Plattform wird hierbei von einem Rechnersystem und der zugehörigen Betriebssystem-Plattform gebildet.

Basiert nun zumindest ein Teil der Vermittlungsstelle auf einer gleichartigen System-Plattform, so vereinfacht sich die Schnittstelle zum Managementsystem, die nun zwischen zwei gleichartigen System-Plattformen verläuft, erheblich. Weiter wird der Einsatz einer Vielzahl von in der Datenverarbeitung für Universal-Anwendung zur Verfügung stehender Hard- und Software-Produkte möglich. Mittels solcher Produkte ist es insbesondere möglich, die für die Kommunikation zwischen der Vermittlungsstelle und dem Managementsystem zur Verfügung stehende Bandbreite erheblich zu vergrößern.

Im Folgenden wird die Erfindung anhand zweier Ausführungsbeispiele unter zuhilfenahme beiliegender Zeichnungen näher erläutert.
Fig. 1 zeigt ein Blockschaltbild eines erfindungsgemäßen Kommunikationssystem mit einer erfindungsgemäßen Vermittlungsstelle für ein erstes Ausführungsbeispiel.
Fig. 2 zeigt eine funktionale Darstellung des erfindungsgemäßen Kommunikationssystems nach Fig. 1.
Fig. 3 zeigt eine funktionale Darstellung von einem Rechnersystem für die erfindungsgemäße Vermittlungsstelle nach Fig. 1.
Fig. 4 zeigt ein Blockschaltbild einer erfindungsgemäßen Vermittlungsstelle für ein zweites Ausführungsbeispiel.

Im ersten Ausführungsbeispiel wird das erfindungsgemäße Verfahren zur Steuerung einer Vermittlungsstelle anhand einer erfindungsgemäßen Vermittlungsstelle beschrieben, die Teil eines erfindungsgemäßen Kommunikationssystems ist.

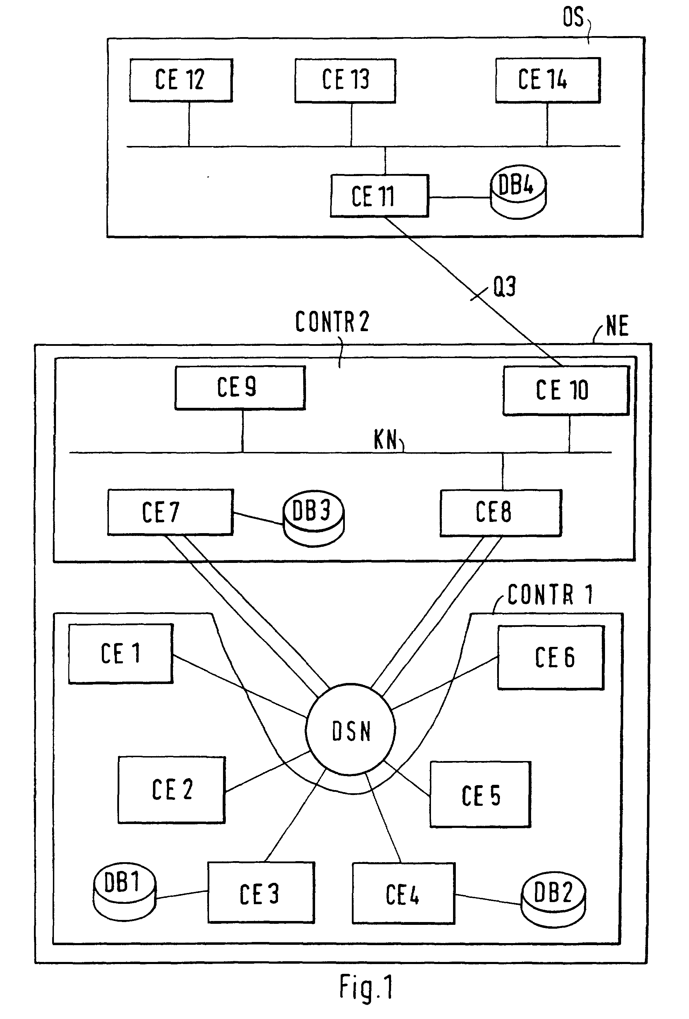

Fig. 1 zeigt eine Vermittlungsstelle NE und ein Managementsystem OS, die miteinander verbunden sind.

Das Managementsystem OS dient der Bedienung, Verwaltung und Wartung der Vermittlungsstelle NE und einer Vielzahl weiterer, hier nicht gezeigter Vermittlungsstellen. Es ist mit der Vermittlungsstelle NE über eine Schnittstelle Q3 verbunden, die dem Q3-Standard nach dem OSI-Schichten-Modell entspricht (OSI = Open System Interconnection). Es ist auch möglich, daß eine andere, vorzugsweise ebenfalls standartisierte Schnittstelle verwendet wird. Solche Schnittstellen sind beispielsweise Schnittstellen, die dem Q1- oder Q2- Standard entsprechen.

Bei der Vermittlungsstelle NE handelt es sich um eine Fernsprech-Vermittlungsstelle. Es ist auch möglich, daß es sich bei der Vermittlungsstelle NE um eine andersartige Vermittlungsstelle handelt, die der Vermittlung von Daten dient. Solche Vermittlungsstellen sind beispielsweise Cross-Connectoren, Multiplexer, aber auch Bridges oder Router für Datennetze.

Die Vermittlungsstelle NE weist ein Koppelnetz DSN, ein Kommunikationsnetz KN, 10 Rechnersysteme CE1 bis CE 10 und drei Datenbasen DB1 bis DB3 auf. Die Rechnersysteme CE1 bis CE6 und die Datenbasen DB1 und DB2 bilden eine Steuereinheit CONTR1. Die Rechnersysteme CE7 bis CE10, die Datenbasis DB3 und das Kommunikationsnetz KN bilden eine Steuereinheit CONTR2. Die Rechnersysteme CE1 bis CE8 tauschen untereinander Daten über das Koppelnetz DSN aus. Die Rechnersysteme CE7 bis CE10 sind über das Kommunikationsnetz KN untereinander verbunden und das Rechnersystem CE10 ist mit dem Managementsystem OS verbunden.

Bei dem Koppelnetz DSN handelt es sich um ein übliches digitales Koppelnetz für Vermittlungsstellen. Es wird von den Steuereinheiten CONTR1 und CONTR2 gesteuert und dient sowohl zum Schalten von Verbindungen für mit der Vermittlungsstelle NE verbundenen Teilnehmern als auch als Kommunikationsmedium für die Kommunikation zwischen den Rechnersystemen CE1 und CE8.

Es ist auch möglich, daß ein eigenständiges Kommunikationsnetz für die Kommunikation zwischen den Rechnersystemen CE1 bis CE10 verwendet wird. Ein hierfür geeignetes Kommunikationsnetz wäre beispielsweise ein LAN (Local Area Netzwerk) mit einem Ethernet oder Token-Zugriffsprotokoll.

Die Rechnersysteme CE1 bis CE6 der Steuereinheit CONTR1 sind auf die Erbringung von Telekommunikationsfunktionen ausgelegte Rechnersysteme. Ihr Aufbau kann beispielhaft dem Artikel "Hardware-Struktur', Seiten 135 bis 147 der Zeitschrift Elektrisches Nachrichtenwesen, Band 58, Nr. 213, 1981 oder anderen Artikeln aus diesem Band entnommen werden.

Die Rechnersysteme CE1 und CE2 dienen der Erfüllung von eher dezentralen Aufgaben, beispielsweise dem Teilnehmeranschluß oder der Zeichengabe für Teilnehmeranschlüsse. Die Rechnersysteme CE3 bis CE6 erfüllen zentrale Aufgaben, beispielsweise die Verbindungssteuerung oder die Steuerung der Gebührenerfassung.

Die Anzahl der Rechnersysteme CE1 bis CE6 ist beispielhaft gewählt.

Es ist weiter möglich, anstelle der Rechnersysteme CE3 bis CE4 ein einzelnes, sehr leistungsfähiges Rechnersystem einzusetzen, das sämtliche zentralere Aufgaben der Steuereinheit CONTR1 durchführt. Auch eine mehrstufige Hierarchie von Rechnersystemen mit immer zentraleren Aufgaben ist möglich. Die Steuereinheit CONTR1 kann so über eine zentrale oder eine verteilte Steuerungs-Architektur verfügen.

Bei den Rechnersystemen CE7 bis CE10 der Steuereinheit CONTR2 handelt es sich um gebräuchliche Universal-Rechnersysteme. Sie verfügen jeweils über einen oder mehrere Prozessoren, über einen internen Rechnerbus, über einen Zentralspeicher, über mindestens einen Massenspeicher und über Baugruppen zum Austausch von Daten über das Kommunikationsnetz KN, d. h. jeweils über eine Ethernet-Karte. Das Rechnersystem CE10 verfügt weiter über Baugruppen zum Austausch von Daten mit dem Rechnersystem CE11, beispielsweise einer Ethernet-, FDDI- oder ISDN-Karte. Die Rechnersysteme CE7 und CE8 verfügen darüberhinaus über Baugruppen, die ihnen jeweils den Aufbau von bis zu zwei Kommunikations-Kanälen im Koppelnetz DSN ermöglichen. Es ist hierbei möglich , die Rechnersysteme CE7 und CE8 mit einer beliebigen Anzahl solcher Baugruppen auszustatten und so die für den Austausch von Informationen zwischen den Steuereinheiten CONTR1 und CONTR2 zur Verfügung stehende Bandbreite beliebig zu erhöhen.

Das Kommunikationsnetz KN wird von einem Bus gebildet, über den die Rechnersysteme CE7 bis CE10 mittels eines Ethernet-Zugriffs-Protokolls miteinander kommunizieren. Für das Kommunikationsnetz KN können auch andere, für die Rechner-Rechner-Kommunikation geeignete, Kommunikationsnetze verwendet werden.

Die Zahl der Rechnersysteme CE7 bis CE10 ist beispielhaft gewählt. Es ist jedoch mindestens ein solches Rechnersystem notwendig. In diesem Fall würde das Kommunikationsnetz KN entfallen. Die Datenbasen DB1 bis DB3 sind Massenspeicher, beispielsweise Festplattenlaufwerke mit hoher Speicherkapazität.

Das Managementsystem OS weist vier über ein Kommunikationsnetz miteinander verbundene Rechnersysteme CE11 bis CE14 und eine Datenbasis DB4 auf. Das Rechnersystem CE11 hat Zugriff auf die Datenbasis DB4 und ist über die Schnittstelle Q3 mit der Vermittlungsstelle NE verbunden.

Die Rechnersysteme CE11 bis CE14 und die Datenbasis DB4 sind wie die Rechnersysteme CE7 bis CE8 bzw. die Datenbasen DB1 bis DB3 aufgebaut. Auf der von ihnen gebildeten Hardware-Plattform laufen Anwendungsprogramme ab, die Netzwerkmanagementfunktionen für das Netzelement NE und für weitere Vermittlungsstellen durchführen.

Die Netzwerkmanagementfunktionen für die Vermittlungsstelle NE werden so von Programmen erbracht, die auf den Rechnersystemen CE11 bis CE14 des Managementsystems OS ablaufen. Die Steuereinheiten CONTR1 und CONTR2 arbeiten bei der Steuerung der Vermittlungsstelle NE zusammen und erbringen so die Vermittlungsfunktionen der Vermittlungsstelle. Bei den Rechnersystemen der Steuereinheit CONTR1 handelt es sich hierbei um spezielle, für die Erbringung von Vermittlungsfunktionen ausgelegte Rechnersysteme, die mit einem ebenso speziellen Betriebssystem arbeiten. Bei den Rechnersystemen der Steuereinheit CONTR2 handelt es sich um Universal-Rechnersysteme, die mit einem entsprechenden Universal-Betriebssystem arbeiten.

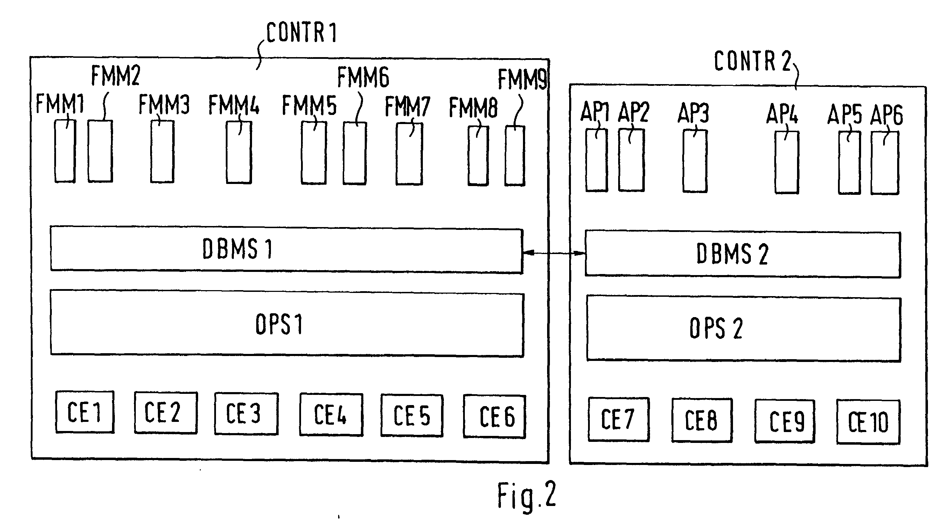

Der funktionelle Aufbau und das Zusammenwirken der Steuereinheiten CONTR1 und CONTR2 wird nun anhand von Fig. 2 erläutert.

Fig. 2 zeigt die Steuereinheiten CONTR1 und CONTR2, die miteinander Daten austauschen.

Die Steuereinheit CONTR1 weist die Rechnersysteme CE1 bis CE6 als Hardware-Basis, ein Betriebssystem OPS1, eine Datenbank DBMS1 und neun Anwenderprogramme FMM1 bis FMM9 auf.

Das Betriebssystem OPS1 und die Rechnersysteme CE1 bis CE6 stellen den Anwendungsprogrammen FMM1 bis FMM9 eine gemeinsame System-Plattform bereit, wobei die Anwendungsprogramme FMM1 bis FMM9 auf einer von dem Betriebssystem OPS1 gebildeten Betriebssystem-Plattform ablaufen.

Bei dem Betriebssystem OPS1 handelt es sich hierbei um ein verteiltes Echtzeit-Betriebssystem, das speziell für die Erbringung von Funktionen ausgelegt ist, die zur Steuerung einer Vermittlungsstelle notwendig sind. Das Betriebssystem OPS1 verwaltet den Ablauf der Anwendungsprogramme FMM1 bis FMM9 auf den Rechnersystemen CE1 bis CE9 und bestimmt hierfür insbesondere die Reihenfolge ihrer Durchführung, startet sie und bestimmt den Zustand, indem sich der Ablauf befindet. Weiter stellt es ihnen Standard-Dienste zur Verfügung, die insbesondere den Transport von Daten zwischen den Anwendungsprogrammen FMM1 bis FMM9 und den Geräten der Rechnersysteme CE1 bis CE6 sowie zwischen den Anwendungsprogrammen FMM1 bis FMM9 durchführen. Weiter koordiniert es beim gleichzeitigen Ablaufen mehrerer der Anwendungsprogramme FMM1 bis FMM9 den Zugriff auf gemeinsame Betriebsmittel.

Auf jedem der Rechnersysteme läuft hierbei ein Betriebssystem-Teil, der die jeweils dort benötigten Betriebssystemfunktionen bereitstellt.

Es ist auch möglich, daß es sich bei dem Betriebssystem OPS1 nicht um ein verteiltes Betriebssystem handelt. Dies ist insbesondere dann der Fall, wenn die Steuereinheit CONTR1 aus einem eizigen, sehr leistungsfähigen Rechnersystem besteht.

Die Datenbank DBMS1 verwaltet einen Teil der von den Anwendungsprogrammen FMM1 bis FMM9 benötigten Daten, beispielsweise semipermanente Variable oder Dateien. Bei der Datenbank DBMS1 handelt es sich um eine verteilte Datenbank, die speziell für die Anforderungen in einer Vermittlungsstelle ausgelegt ist. Die Daten sind hierbei in den Datenbasen DB1 und DB2 des Rechnersystems CE3 bzw. CE4 abgespeichert. Der Zugriff auf diese Daten kann von jedem der Anwendungsprogramme FMM1 bis FMM9 mittels spezieller, an die Datenbank DBMS1 gerichteter Befehle erfolgen.

Es ist auch möglich auf die Bereitstellung einer solchen verteilten Datenbank zu verzichten.

Die Anwendungsprogramme FMM1 bis FMM9 erbringen die Vermittlungsfunktionen der Steuereinheit CONTR1 und arbeiten hierzu untereinander und mit der Steuereinheit CONTR2 zusammen. Es handelt sich bei ihnen um Programme in Echtzeit-Implementierung, die in der Programmiersprache CHILL geschrieben sind und nach dem Konzept der virtuellen Maschinen ihre Funktionen in Echtzeit ausführen.

Die Anzahl von Anwendungsprogrammen und ihre Verteilung auf die Rechnersysteme CE1 bis CE6 sind hier beispielhaft gewählt. Die von den Anwendungsprogrammen FMM1 bis FMM9 erbrachten Funktionen und das Zusammenwirken der Anwendungsprogramme FMM1 bis FMM9 kann beispielhaft dem Artikel "System 12 - Konzeption und Realisierung der Software" aus der Zeitschrift "Elektrisches Nachrichtenwesen", Band 56, Nummer 2/3, 1989 von C. Katschner entnommen werden.

Die Steuereinheit CONTR2 weist die Rechnersysteme CE7 bis CE10 als Hardware-Basis, ein Betriebssystem OPS2, eine Datenbank DBMS2 und sechs Anwendungsprogramme AP1 bis AP6 auf.

Das Betriebssystem OPS2 und die Rechnersysteme CE7 bis CE10 stellen den Anwendungsprogrammen AP1 bis AP6 eine Universal-System-Plattform bereit. Dies bedeutet, daß es sich bei dem Betriebssystem OPS2 um ein Betriebssystem für Universalrechner handelt, dessen Funktionsweise und Schnittstellen bekannt sind, so daß für Universal-Rechner entwickelte Anwendungsprogramme und Programm-Module auf dieser von dem Betriebssystem OPS2 gebildeten Betriebssystem-Plattform lauffähig sind.

Bei dem Betriebssystem OPS2 handelt es sich um ein verteiltes Nicht-Echtzeit-Betriebssystem, beispielsweise um eine Unix-Version, die auf mehreren Rechnersystemen läuft. Wie das Betriebssystem OPS1 verwaltet und unterstützt das Betriebssystem OPS2 den Ablauf der Anwendungsprogramme AP1 bis AP2 und stellt ihnen insbesondere eine Vielzahl von Standard-Diensten zur Verfügung.

Es ist auch möglich, daß es sich bei dem Betriebssystem OPS2 nicht um ein verteiltes Betriebssystem handelt. Es ist möglich, daß jedes der Rechnersysteme CE7 bis CE10 über ein eigenständiges netzwerkfähiges Betriebssystem verfügt. Über die in solchen Betriebssystemen zur Verfügung stehenden Funktionen wäre so ebenfalls eine Zusammenarbeit der Anwendungsprogramme AP1 bis AP6 möglich und es würde so ebenfalls eine zusammenhängende System-Plattform für diese Anwendungsprogramme geschaffen.

Bei der Datenbank DBMS1 handelt es sich um eine gebräuchliche, universell einsetzbare relationale Datenbank, beispielsweise nach dem SQL-Standard. Eine solche Datenbank ist beispielsweise die unter der Bezeichnung ORAKEL vertriebene Datenbank. Die Datenbank DBMS2 verwaltet wie die Datenbank DBMS1 für die Anwendungsprogramme AP1 bis AP6 zentral Daten, die in der Datenbasis DB3 abgespeichert sind.

Die Anwendungsprogramme AP1 bis AP6 führen die von der Steuereinheit CONTR2 zu erbringenden Funktionen aus und arbeiten hierzu untereinander und mit Anwendungsprogrammen der Steuereinheit CONTR1 zusammen. Die Anwendungsprogramme AP1 bis AP6 sind in der Programmiersprache C++ geschrieben. Es ist auch möglich, daß sie in einer anderen, gebräuchlichen Programmiersprache geschrieben sind, die für Universal-Anwendungen konzipiert ist.

Es ist hierbei vorteilhaft, eine Vielzahl von Standard-Programm-Modulen in den Anwendungsprogrammen AP1 bis AP6 zu verwenden. Solche Programm-Module stehen für Programme, die in einer Universal-Programmiersprache geschrieben sind und auf einer Universal-Plattform ablaufen, in großer Zahl zur Verfügung.

Die Vermittlungsfunktionen werden von den Steuereinheiten CONTR1 und CONTR2 so wie folgt erbracht:

Die Steuereinheit CONTR1 ist für die Durchführung von Standardvermittlungsaufgaben oder Vermittlungsgrundaufgaben in Echtzeit zuständig. Die einzelnen Aufgaben werden hierbei mittels der Durchführung der Anwendungsprogramme FMM1 bis FMM2 erbracht.

Die Steuereinheit CONTR2 ist für die Erbringung komplexer Vermittlungsfunktionen und für die Anbindung des Managementsystems OS zuständig. Die Aufgabe solcher Vermittlungsfunktionen besteht hierbei beispielsweise in der Erbringung von ISDN-Leistungsmerkmalen, Centrex-Diensten, in der Einzelgesprächsregistrierung oder in Anwendungen oder Diensten für Mobilfunk oder für intelligente Netze. Diese Aufgaben werden mittels der Durchführung der Anwendungsprogramme AN1 bis AN2 durch die Rechnersysteme CE1 bis CE10 erbracht.

Die Anbindung des Managementsystems OS ist hierbei auf vorteilhafte Weise vereinfacht. Sowohl bei dem Rechnersystem CE10 der Steuereinheit CONTR2 als auch bei dem Rechnersystem CE11 der Steuereinheit CONTR2 des Managementsystems OS handelt es sich um Universal-Rechnersysteme, so daß eine Vielzahl von Hardware-Produkten, beispielsweise LAN-Karten (LAN = Local Area Network) für die Verbindung zur Verfügung stehen. Da sie desweiteren beide über Universal-Betriebssysteme, also über gleichartige Betriebssysteme verfügen, ist der Einsatz einer Vielzahl von Standard-Software-Produkten für die höheren Kommunikationsebenen möglich. Die Schnittstelle zum Managementsystem OS verläuft so praktisch innerhalb derselben Plattform.

Für die Durchführung ihrer Aufgaben ist es notwendig, daß die Anwendungsprogramme FMM1 bis FMM9 und die Anwendungsprogramme A1 bis A6 zusammenarbeiten. Die Zusammenarbeit erfolgt hierbei zum Teil nach dem Client-Server-Prinzip: Eines der Anwendungsprogramme FFM1 bis FFM9 vergibt einen Auftrag an die Steuereinheit CONTR2, der mittels der Durchführung eines der Anwendungsprogramme AP1 bis AP6 erledigt wird. Ein unter Umständen vorliegendes Ergebnis wird sodann von diesem Anwendungsprogramm an das Anwendungsprogramm zurückgesendet, das den Auftrag gegeben hat. Beispielsweise erledigen Anwendungsprogramme der Steuereinheit CONTR1 Call-Handling-Aufgaben oder Aufgaben in Bezug auf die Erbringung von Diensten und stellen so einen Call-Handling-Server bzw. Dienste-Server für Anwendungsprogramme der Steuereinheit CONTR2 dar.

Es ist hierbei besonders vorteilhaft, komplexe, nicht so zeitkritische Funktionen durch Anwendungsprogramme der Steuereinheit CONTR2 durchführen zu lassen. Der Aufwand für die Entwicklung und den Test von Anwendungsprogrammen zur Erfüllung solcher Aufgaben ist für Anwendungsprogramme, die auf der System-Plattform der Steuereinheit CONTR2 ablaufen, erheblich geringer.

Für die Zusammenarbeit von Anwendungsprogrammen der Steuereinheit CONTR1 und CONTR2 ist es notwendig, daß trotz unterschiedlicher System-Plattformen Mechanismen zum Austausch von Nachrichten und Daten zwischen solchen Anwendungsprogrammen zur Verfügung stehen.

Die Steuereinheiten CONTR1 und CONTR2 sind hierfür über die Kopplung ihrer Datenbanken DBMS1 und DBMS2 datenmäßig gekoppelt. Hierfür werden Daten, die die Anwendungsprogramme FMM1 bis FMM9 und AP1 bis AP2 zur Erfüllung ihrer Aufgaben benötigen von den Datenbanken DBMS1 und DBMS2 verwaltet. Solche Daten sind beispielsweise semipermanente Variable dieser Anwendungsprogramme, Teilnehmerdaten, Daten über den Zustand des Koppelnetzes DSN, Daten über zu erbringende Telekommunikationsdienste oder Daten über die Verkehrsbelastung der Vermittlungsstelle. Durch die Verkopplung der Datenbanken DBMS1 und DBMS2, beispielsweise mittels eines Replikationsmechanismus, stehen diese Daten sowohl den Anwendungsprogrammen FMM1 bis FMM9 als auch den Anwendungsprogrammen AP1 bis AP6 zur Verfügung. Desweiteren werden auch solche Daten von den Datenbanken DBMS1 und DBMS2 verwaltet und in der jeweiligen anderen Steuereinheit sichtbar gemacht, die den Ablauf oder das Ergebnis von Anwendungsprogrammen der jeweiligen anderen Steuereinheit verändern.

Es ist auch möglich, die Steuereinheiten CONTR1 und CONTR2 über andere Mechanismen zu verkoppeln. Beispielsweise ist es möglich, daß Anwendungsprogramme über spezielle Kommunikationsprotokolle, beispielsweise über FTP (File Transfer Protocol) gegenseitig Nachrichten austauschen.

Die der Kopplung der Steuereinheiten CONTR1 und CONTR2 zugrundeliegenden Kommunkationsmechanismen werden nun anhand des Hard- und Software-Aufbaus des Rechnersystems CE7 erläutert.

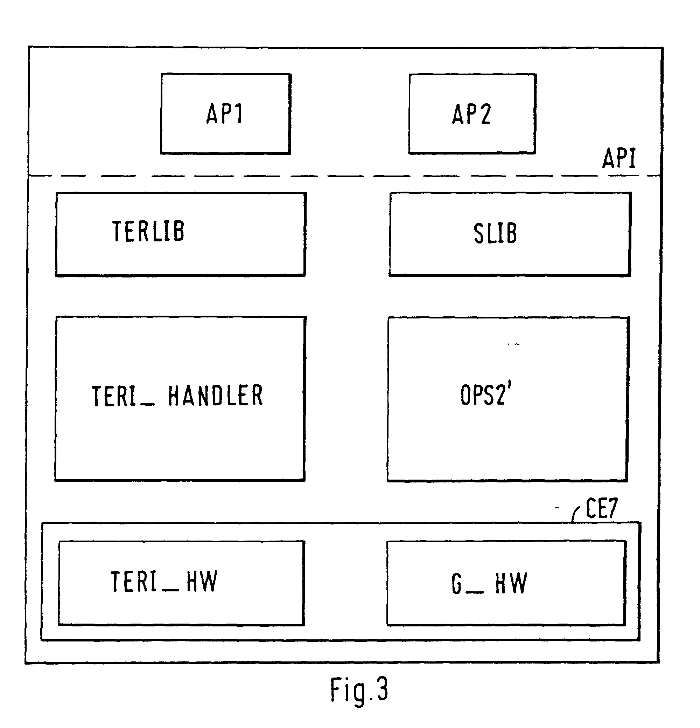

Fig. 3 zeigt das Rechnersystem CE7 mit den Programm-Modulen TERI HANDLER, OPS2', TERLIB und SLIB und den Anwendungsprogrammen AP1 und AP2.

Das Rechnersystem CE7 besteht aus zwei Hardware-Modulen TERI_HW und G_HW. Bei dem Hardware-Modul G_HW handelt es sich um die eine Universal-Rechnersystem ausmachenden Baugruppen. Bei dem Hardware-Modul TERI_HW handelt es sich um eine spezielle Baugruppe zur Kommunikation mit den Rechnersystemen CE1 bis CE6 über das Koppelnetz DSN. Sie entspricht im Aufbau den entsprechenden Kommunikationsbaugruppen in den Rechnersystemen CE1 bis CE6. Bei dem Programm-Modul OPS2' handelt es sich um den Betriebssystem-Teil des Betriebssystems OS2, der auf dem Rechnersystem CE7 abläuft. Das Programm-Modul TERI_HANDLER ist ein Gerätetreiber, der den Zugriff auf das Hardware-Modul TERI_HW ermöglicht. Die Programm-Module TERLIB und SLIB sind Programm-Bibliotheken, die den Anwendungsprogrammen AP1 und AP2 zur Verfügung stehen. Bei dem Programm-Modul SLIB handelt es sich hierbei um eine Standard-Bibliothek für das Betriebssystem OSP2 und bei dem Programm-Modul TERLIB um ein Bibliothek von Programmen, die Zugriffsfunktionen auf das Hardware-Modul TERI_HW erbringen.

Die Anwendungsprogramme AP1 und AP2 nutzen die Funktionen, die ihnen die Programm-Module TERLIB, TERI_HANDLER, SLIB und OPS2' zur Verfügung stellen und greifen so über eine Schnittstelle API auf diese Programm-Module zu. Es ist ihnen so möglich, sowohl sämtliche Mechanismen und Standard-Funktionen zu nutzen, die ihnen auf dem Universal-Betriebssystem OSP2 bereitstehen, als auch über äquivalent aufgebaute Mechanismen und Funktionen mit den Rechnersystemen CE1 bis CE6 zu kommunizieren.

In einem zweiten Ausführungsbeispiel wird eine andere Möglichkeit zur hardwaremäßigen Kopplung der Steuereinheiten CONTR1 und CONTR2 aufgezeigt.

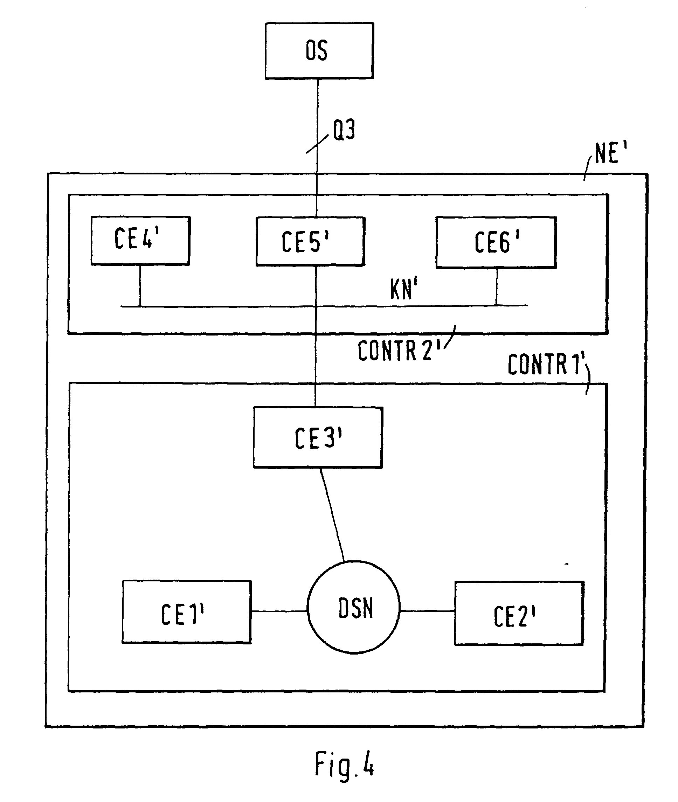

Fig. 4 zeigt eine Vermittlungsstelle NE', die über die Schnittstelle Q3 mit dem Managementsystem OS verbunden ist. Die Vermittlungsstelle NE' weist das Koppelnetz DSN, sechs Rechnersysteme CE1' bis CE6' und ein Kommunikationsnetz KN' auf. Die Rechnersysteme CE1' bis CE3' sind über das Koppelnetz DSN und die Rechnersysteme CE3' bis CE6' über das Kommunikationsnetz KN' miteinander verbunden.

Die Rechnersysteme CE1' bis CE3' bilden eine Steuereinheit CONTR1' und sind wie die Rechnersysteme CE1 bis CE6 nach Fig. 1 ausgestaltet. Die Rechnersysteme CE4' bis CE6' und das Kommunikationsnetz KN' bilden eine Steuereinheit CONTR2' und sind wie die Rechnersysteme CE7 bis CE10 bzw. wie das Kommunikationsnetz KN ausgestaltet.

Im Gegensatz zur Vermittlungsstelle NE nach Fig. 1 ist hier ein spezielles Rechnersystem, das Rechnersystem CE3' für die Kommunikation der Steuereinheit CONTR1' mit der Steuereinheit CONTR2' verantwortlich. Es ist notwendig, daß das Rechnersystem CE3' mit entsprechenden Baugruppen und Software-Modulen versehen ist, die ihm analog zu Fig. 3 die Kommunikation mit den Rechnersystemen CE4' bis CE6' ermöglicht.

## Patentansprüche

1. Verfahren zum Steuern einer Vermittlungsstelle (NE), bei dem die Vermittlungsstelle (NE) von einer Vielzahl von Anwendungsprogrammen (FMM1 bis FMM9, AP1 bis AP6) gesteuert wird, bei dem Anwendungsprogramme (FMM1 bis FMM9) auf einer auf die Durchführung von Vermittlungsfunktionen spezialisierten Betriebssystem-Platform (OPS1) einer ersten Steuereinheit (CONTR1) ablaufen, bei dem die Anwendungsprogramme (FMM1 bis FMM9, AP1 bis AP6) unterschiedlichen Steuereinheiten (CONTR1; CONTR2), der ersten und einer zweiten Steuereinheit (CONTR1; CONTR2), mit unterschiedlichen Betriebssystem-Platformen (OPS1; OPS2) zugeordnet werden, und bei dem die Anwendungsprogramme (AP1 bis AP6) der zweiten Steuereinheit (CONTR2) auf einer Universal-Betriebssystem-Platform (OPS2) ablaufen, **dadurch gekennzeichnet,**
- **daß** Anwendungsprogramme (FMM1 bis FMM9) der ersten Steuereinheit (CONTR1) für die Erbringung von Vermittlungsfunktionen mit Anwendungsprogramme (AP1 bis AP6) der zweiten Steuereinheit (CONTR2) zusammenarbeiten,
- **daß** die Anwendungsprogramme (FMM1 bis FMM9, AP1 bis AP6) der ersten und der zweiten Steuereinheit (CONTR1, CONTR2) auf getrennten Rechnersystemen (CE1 bis CE10) ablaufen, die über ein Kommunikationsnetz Daten austauschen,
- **daß** die erste Steuereinheit (CONTR1), die aus einem Rechnersystem oder aus mehreren miteinander verbundenen Rechnersystemen (CE1 bis CE6, CE7 bis CE1O) besteht, und die zweite Steuereinheit (CONTR2), die aus einem Rechnersystem oder aus mehreren miteinander verbundenen Rechnersystemen (CE7 bis CE10) besteht, für die Steuerung des Koppelnetzes (DSN) der Vermittlungstelle (NE) zuständig sind,
- **daß** die Anwendungsprogramme (FMM1 bis FMM9; AP1 bis AP6) der ersten und der zweiten Steuereinheit (CONTR1; CONTR2) nach dem Client-Server-Prinzip zusammenarbeiten, in dem eines der Anwendungsprogramme (FMM1 bis FMM9) der ersten Steuereinheit (CONTR1) einen Auftrag an die zweite Steuereinheit (CONTR2) vergibt, der mittels der Durchführung eines der Anwendungsprogramme (AP1 bis AP6) der zweiten Steuereinheit (CONTR2) erledigt wird, und ein Ergebnis, wenn nötig, von dem einen der Anwendungsprogramme (AP1 bis AP6) der zweiten Steuereinheit (CONTR2) an das Anwendungsprogramm (FMM1 bis FMM9) der ersten Steuereinheit (CONTR1), das den Auftrag gegeben hat, zurückgesendet wird, und
- **daß** die zweite Steuereinheit (CONTR2) für die Erbringung komplexer Vermittlungsfunktionen und für die Anbindung an ein Managementsystem (OS) zuständig ist.

2. Verfahren nach Anspruch 1, **dadurch gekennzeichnet, daß** Anwendungsprogramme (AP1 bis AP6) der zweiten Steuereinheit (CONTR2) als Dienste- und Call-Handling-Server für Anwendungsprogramme (FMM1 bis FMM9) der ersten Steuereinheit (CONTR1) fungieren.

3. Verfahren nach Anspruch 1, **dadurch gekennzeichnet, daß** die erste und die zweite Steuereinheit (CONTR1, CONTR2) datenmäßig gekoppelt werden.

4. Verfahren nach Anspruch 3, **dadurch gekennzeichnet, daß** in der ersten und in der zweiten Steuereinheit jeweils eine Datenbank (DBMS1, DBMS2) bereitgestellt wird, daß die Datenbanken (DBMS1, DBMS2) gekoppelt werden und daß Anwendungsprogramme (AP1 bis AP6) der zweiten Steuereinheit (CONTR2) über diese Kopplung der Datenbanken (DBMS1, DBMS2) auf Daten der ersten Steuereinheit (CONTR1) zugreifen.

5. Verfahren nach Anspruch 1, **dadurch gekennzeichnet, daß** von der zweiten Steuereinheit (CONTR2) aus der Zugriff auf alle relevanten Daten der ersten Steuereinheit (CONTR1) ermöglicht wird und die erste Steuereinheit (CONTR1) somit ein offenes System bildet.

6. Verfahren nach Anspruch 1, **dadurch gekennzeichnet, daß** von Anwendungsprogrammen (AP1 bis AP6) der zweiten Steuereinheit (CONTR2) Netzwerkmanagement-Funktion bearbeitet werden.

7. Vermittlungsstelle (NE) mit einem Koppelnetz (DSN) und einer Steuerung, die mit einer Vielzahl von Anwendungsprogrammen (FMM1 bis FMM9, AP1 bis AP6) zur Steuerung der Vermittlungsstelle (NE) und einer ersten Steuereinheit (CONTR1) mit einer auf die Durchführung von Vermittlungsfunktionen spezialisierten Betriebssystem-Platform (OPS1) versehen ist, bei der die Anwendungsprogramme (FMM1 bis FMM9, AP1 bis AP6) zwei verschiedenartigen Steuereinheiten (CONTR1; CONTR2), der ersten und einer zweiten Steuereinheit (CONTR1; CONTR2) zugeordnet sind, bei der die zweite Steuereinheit (CONTR2) mit einer Universal-Betriebssystem-Platform (OPS2) versehen ist, und bei der Anwendungsprogramme (FMM1 bis FMM9; AP1 bis AP6) der beiden Steuereinrichtungen (CONTR1; CONTR2) so ausgestaltet sind, daß sie auf der jeweiligen Betriebssystem-Plattform (OPS1; OPS2) lauffähig sind, **dadurch gekennzeichnet,**
- **daß** die Anwendungsprogramme weiter so ausgestaltet sind, daß sie für die Erbringung von Vermittlungsfunktionen mit den Anwendungsprogrammen (FMM1 bis FMM9; AP1 bis AP6) der jeweiligen anderen Steuereinheit (CONTR1; CONTR2) zusammenarbeiten,
- **daß** die Vermittlungsstelle (NE) Rechnersysteme (CE1 bis CE10) aufweist, auf welchen Anwendungsprogramme (FMM1 bis FMM9, AP1 bis AP6) der ersten und der zweiten Steuereinheit (CONTR1, CONTR2) ablaufen, und Mittel, mittels derer die Rechnersysteme (CE1 bis CE10) über ein Kommunikationsnetz Daten austauschen,
- **daß** die erste Steuereinheit (CONTR1) aus einem Rechnersystem oder aus mehreren miteinander verbundenen Rechnersystemen (CE1 bis CE6, CE7 bis CE10) besteht, und die zweite Steuereinheit (CONTR2) aus einem Rechnersystem oder aus mehreren miteinander verbundenen Rechnersystemen (CE7 bis CE10) besteht, und die erste und die zweite Steuereinheit (CONTR1, CONTR2) Mittel für die Steuerung des Koppelnetzes (DSN) der Vermittlungstelle (NE) sind,
- **daß** die Anwendungsprogramme (FMM1 bis FMM9; AP1 bis AP6) der ersten und der zweiten Steuereinheit (CONTR1; CONTR2) weiter so ausgestaltet sind, daß sie nach dem Client-Server-Prinzip zusammenarbeiten, in dem eines der Anwendungsprogramme (FMM1 bis FMM9) der ersten Steuereinheit (CONTR1) einen Auftrag an die zweite Steuereinheit (CONTR2) vergibt, der mittels der Durchführung eines der Anwendungsprogramme (AP1 bis AP6) der zweiten Steuereinheit (CONTR2) erledigt wird, und ein Ergebnis, wenn nötig, von dem einen der Anwendungsprogramme (AP1 bis AP6) der zweiten Steuereinheit (CONTR2) an das Anwendungsprogramm (FMM1 bis FMM9) der ersten Steuereinheit (CONTR1), das den Auftrag gegeben hat, zurückgesendet wird, und
- **daß** die zweite Steuereinheit (CONTR2) Mittel für die Erbringung komplexer Vermittlungsfunktionen und für die Anbindung an ein Managementsystem (OS) aufweist.

8. Vermittlungsstelle (NE) nach Anspruch 7, **dadurch gekennzeichnet, daß** Rechnersysteme (CE1 bis CE6) der ersten Steuereinheit (CONTR1) so ausgestaltet sind, daß sie auf die Erbringung von Vermittlungsfunktionen spezialisiert sind und daß die Rechnersysteme (CE7 bis CE10) der zweiten Steuereinrichtung (CONTR2) Universal-Rechnersysteme sind.

9. Vermittlungsstelle (NE') nach Anspruch 7, **dadurch gekennzeichnet, daß** mindestens ein Rechnersystem (CE3') der ersten Steuereinheit (CONTR1') mit einer Schnittstelleneinrichtung zum Anbinden der zweiten Steuereinheit (CONTR2') versehen ist.

10. Kommunikationssystem mit einem Managementsystem (OS) und mit einer Vielzahl mit dem Managementsystem (OS) verbundener Vermittlungsstellen (NE), **dadurch gekennzeichnet, daß** mindestens eine Vermittlungsstelle (NE) wie die Vermittlungsstelle nach Anspruch 7 ausgestaltet ist und daß das Managementsystem (OS) über die zweite Steuereinheit (CONTR2) mit dieser Vermittlungsstelle (NE) verbunden ist.

11. Kommunikationssystem nach Anspruch 10, **dadurch gekennzeichnet, daß** das Managementsystem (OS) und die zweite Steuereinheit (CONTR2) mit gleichartigen Betriebssystem-Plattformen versehen sind.

## Claims

1. Method of controlling a switching centre (NE), in which the switching centre (NE) is controlled by a plurality of application programs (FMM1 to FMM9, AP1 to AP6), in which application programs (FMM1 to FMM9) run on an operating system platform (OPS1), which is specialised for carrying out switching functions, of a first control unit (CONTR1), in which the application programs (FMM1 to FMM9, AP1 to AP6) are assigned to different control units (CONTR1; CONTR2), the first and a second control unit (CONTR1; CONTR2), with different operating system platforms (OPS1; OPS2), and in which the application programs (AP1 to AP6) of the second control unit (CONTR2) run on a universal operating system platform (OPS2), **characterized in that**
- application programs (FMM1 to FMM9) of the first control unit (CONTR1) co-operate with application programs (AP1 to AP6) of the second control unit (CONTR2) to provide switching functions,
- the application programs (FMM1 to FMM9, AP1 to AP6) of the first and second control units (CONTR1, CONTR2) run on separate computer systems (CE1 to CE10), which exchange data via a communication network,
- the first control unit (CONTR1), which comprises a computer system or multiple computer systems (CE1 to CE6, CE7 to CE10) which are connected to each other, and the second control unit (CONTR2), which comprises a computer system or multiple computer systems (CE7 to CE10) which are connected to each other, are responsible for controlling the switching network (DSN) of the switching centre (NE),
- the application programs (FMM1 to FMM9, AP1 to AP6) of the first and second control units (CONTR1; CONTR2) co-operate according to the client-server principle, in which one of the application programs (FMM1 to FMM9) of the first control unit (CONTR1) assigns a task to the second control unit (CONTR2), said task being carried out by executing one of the application programs (AP1 to AP6) of the second control unit (CONTR2), and a result, if required, being sent back by one of the application programs (AP1 to AP6) of the second control unit (CONTR2) to that application program (FMM1 to FMM9) of the first control unit (CONTR1) which assigned the task, and
- the second control unit (CONTR2) is responsible for providing complex switching functions and for connecting to a management system (OS).

2. Method according to Claim 1, **characterized in that** application programs (AP1 to AP6) of the second control unit (CONTR2) function as service and call handling servers for application programs (FMM1 to FMM9) of the first control unit (CONTR1).

3. Method according to Claim 1, **characterized in that** the first and second control units (CONTR1, CONTR2) are linked for data purposes.

4. Method according to Claim 3, **characterized in that** in each of the first and second control units, a database (DBMS1, DBMS2) is provided, that the databases (DBMS1, DBMS2) are linked, and that application programs (AP1 to AP6) of the second control unit (CONTR2) access data of the first control unit (CONTR1) via this linkage of the databases (DBMS1, DBMS2).

5. Method according to Claim 1, **characterized in that** from the second control unit (CONTR2), access to all relevant data of the first control unit (CONTR1) is made possible, and the first control unit (CONTR1) thus forms an open system.

6. Method according to Claim 1, **characterized in that** network management functions are carried out by application programs (AP1 to AP6) of the second control unit (CONTR2).

7. Switching centre (NE), with a switching network (DSN) and a control facility, which is provided with a plurality of application programs (FMM1 to FMM9, AP1 to AP6) to control the switching centre (NE), and a first control unit (CONTR1), with an operating system platform (OPS1) which is specialised for carrying out switching functions, in which the application programs (FMM1 to FMM9; AP1 to AP6) are assigned to two different control units (CONTR1; CONTR2), the first and a second control unit (CONTR1; CONTR2), in which the second control unit (CONTR2) is provided with a universal operating system platform (OPS2), and in which application programs (FMM1 to FMM9; AP1 to AP6) of the two control units (CONTR1; CONTR2) are designed in such a form that they are capable of running on the appropriate operating system platform (OPS1; OPS2), **characterized in that**
- the application programs are further designed in such a form that they co-operate with the application programs (FMM1 to FMM9; AP1 to AP6) of the other control unit (CONTR1; CONTR2) to provide switching functions,
- the switching centre (NE) comprises computer systems (CE1 to CE10), on which application programs (FMM1 to FMM9, AP1 to AP6) of the first and second control units (CONTR1, CONTR2) run, and means by which the computer systems (CE1 to CE10) exchange data via a communication network,
- the first control unit (CONTR1) comprises a computer system or multiple computer systems (CE1 to CE6, CE7 to CE10) which are connected to each other, and the second control unit (CONTR2) comprises a computer system or multiple computer systems (CE7 to CE10) which are connected to each other, and the first and second control units (CONTR1; CONTR2) are means for controlling the switching network (DSN) of the switching centre (NE),
- the application programs (FMM1 to FMM9; AP1 to AP6) of the first and second control units (CONTR1; CONTR2) are further designed in such a form that they co-operate according to the client-server principle, in which one of the application programs (FMM1 to FMM9) of the first control unit (CONTR1) assigns a task to the second control unit (CONTR2), said task being carried out by executing one of the application programs (AP1 to AP6) of the second control unit (CONTR2), and a result, if required, being sent back by one of the application programs (AP1 to AP6) of the second control unit (CONTR2) to that application program (FMM1 to FMM9) of the first control unit (CONTR1) which assigned the task, and
- the second control unit (CONTR2) comprises means for providing complex switching functions and for connecting to a management system (OS).

8. Switching centre (NE) according to Claim 7, **characterized in that** computer systems (CE1 to CE6) of the first control unit (CONTR1) are designed in such a form that they are specialised for providing switching functions, and that the computer systems (CE7 to CE10) of the second control device (CONTR2) are universal computer systems.

9. Switching centre (NE') according to Claim 7, **characterized in that** at least one computer system (CE3') of the first control unit (CONTR1') is provided with an interface device to connect the second control unit (CONTR2').

10. Communication system comprising a management system (OS) and a plurality of switching centres (NE) which are connected to the management system (OS), **characterized in that** at least one switching centre (NE) is designed in a similar form as the switching centre according to Claim 7, and that the management system (OS) is connected to this switching centre (NE) via the second control unit (CONTR2).

11. Communication system according to Claim 10, **characterized in that** the management system (OS) and the second control unit (CONTR2) are provided with similar operating system platforms.

## Revendications

1. Procédé pour commander un central de commutation (NE), dans lequel le central de commutation (NE) est commandé par une multiplicité de programmes d'application (FMM1 à FMM9, à AP1 à AP6), dans lequel les programmes d'application (FMM1 à FMM9) se déroulent sur une plate-forme de système d'exploitation (OPS1) d'une première unité de commande (CONTR1) dédiée à l'exécution de fonctions de commutation, dans lequel les programmes d'application (FMM1 à FMM9, AP1 à AP6) sont affectés aux différentes unités de commande (CONTR1 ; CONTR2), de la première et d'une seconde unité de commande (CONTR1 ; CONTR2), avec des plate-formes de système d'exploitation différentes (OPS1 ; OPS2), et dans lequel les programmes d'application (AP1 à AP6) de la seconde unité de commande (CONTR2) se déroulent sur une plate-forme de système d'exploitation (OPS2), **caractérisé en ce que**,
- les programmes d'application (FMM1 à FMM9) de la première unité de commande (CONTR1) coopèrent avec les programmes d'application (AP1 à AP6) de la seconde unité de commande (CONTR2) pour la fourniture de fonctions de commutation,
- les programmes d'application (FMM1 à FMM9, AP1 à AP6) de la première et de la seconde unité de commande (CONTR1, CONTR2) se déroulent sur des systèmes informatiques séparés (CE1 à CE10), qui échangent des données par l'intermédiaire d'un réseau de communication,
- la première unité de commande (CONTR1) consiste en un ou plusieurs système(s) informatique(s) (CE1 à CE6, CE7 à CE10) reliés entre eux, et la seconde unité de commande (CONTR2) qui consiste en un système ou plusieurs système(s) informatique(s) (CE7 CE10) relié(s) entre eux, sont responsables de la commande du réseau de connexion (DSN) du central de commande (NE),
- les programmes d'application (FMM1 à FMM9 ; AP1 à AP6) de la première et de la seconde unité de commande (CONTR1 ; CONTR2) coopèrent selon le principe Client/Serveur, dans lequel l'un des programmes d'application (FMM1 à FMM9) de la première unité de commande (CONTR1) donne un ordre à la seconde unité de commande (CONTR2), qui est traité au moyen de l'exécution de l'un des programmes d'application (AP1 à AP6) de la seconde unité de commande (CONTR2), et un résultat est renvoyé, au besoin, par l'un des programmes d'application (AP1 à AP6) de la seconde unité de commande (CONTR2) au programme d'application (FMM1 à FMM9) de la première unité de commande (CONTR1) qui a donné l'ordre, et
- la seconde unité de commande (CONTR2) est responsable de la fourniture de fonctions de commutation complexes et de la liaison à un système de gestion (OS).

2. Procédé selon la revendication 1, **caractérisé en ce que** les programmes d'application (AP1 à AP6) de la seconde unité de commande (CONTR2) fonctionnent comme serveurs de services et de traitement d'appels et pour les programmes d'application (FMM1 à FMM9) de la première unité de commande (CONTR1).

3. Procédé selon la revendication 1, **caractérisé en ce que** la première et la seconde unité de commande (CONTR1, CONTR2) sont couplées en fonction des données.

4. Procédé selon la revendication 3, **caractérisé en ce que** dans la première et la seconde unité de commande, respectivement, une base de données (DBMS1, DBMS2) est disponible, les bases de données (DBMS1, DBMS2) sont couplées et les programmes d'application (AP1 à AP6) de la seconde unité de commande (CONTR2) accèdent aux données de la première unité de commande (CONTR1) par le couplage des bases de données (DBMS1, DBMS2).

5. Procédé selon la revendication 1, **caractérisé en ce qu'**il est possible d'accéder à toutes les données pertinentes de la première unité de commande (CONTR1) depuis la seconde unité de commande (CONTR2) et la première unité de commande (CONTR1) forme ainsi un système ouvert.

6. Procédé selon la revendication 1, **caractérisé en ce que** la fonction de gestion de réseau est traitée par les programmes d'application (AP1 à AP6) de la seconde unité de commande (CONTR2).

7. Central de commutation (NE) doté d'un réseau de connexion (DSN) et d'une commande, équipé d'une multiplicité de programmes d'application (FMM1 à FMM9, AP1 à AP6) pour commander le central de commutation (NE) et d'une première unité de commande (CONTR1) dotée d'une plate-forme de système d'exploitation (OPS1) dédiée à l'exécution de fonctions de commutation, dans lequel des programmes d'application (FMM1 à FMM9, AP1 à AP6) sont affectés à deux unités de commande de type différent (CONTR1 ; CONTR2), la première et une seconde unité de commande (CONTR1 ; CONTR2), dans lequel la seconde unité de commande (CONTR2) est équipée d'une plate-forme de système d'exploitation universelle (OPS2), et dans lequel les programmes d'application (FMM1 à FMM9 ; AP1 à AP6) des deux dispositifs de commande (CONTR1 ; CONTR2) sont formés de sorte qu'ils puissent tourner sur chaque plate-forme de système d'exploitation (OPS1 ; OPS2), **caractérisé en ce que**,
- les programmes d'application sont, en outre, formés de sorte qu'ils coopèrent avec les programmes d'application (FMM1 à FMM9 ; AP1 à AP6) de l'autre unité de commande respective (CONTR1 ; CONTR2) pour la fourniture de fonctions de commutation,
- le central de commutation (NE) présente des systèmes informatiques (CE1 CE10), sur lesquels les programmes d'application (FMM1 à FMM9, AP1 AP6) de la première et de la seconde unité de commande (CONTR1, CONTR2) se déroulent, et des moyens, à l'aide desquels les systèmes informatiques (CE1 à CE10) échangent des données par l'intermédiaire d'un réseau de communication,
- la première unité de commande (CONTR1) consiste en un ou plusieurs systèmes (CE1 à CE6, CE7 à CE10) reliés entre eux, et la seconde unité de commande (CONTR2) consiste en un système ou plusieurs systèmes (CE7 CE10) reliés entre eux, et la première et la seconde unité de commande (CONTR1, CONTR2) sont les moyens pour la commande du réseau de connexion (DSN) du central de commutatuin (NE),
- les programmes d'application (FMM1 à FMM9 ; AP1 à AP6) de la première et de la seconde unité de commande (CONTR1 ; CONTR2) sont, en outre, formés de sorte qu'ils coopèrent selon le principe Client/Serveur, dans lequel l'un des programmes d'application (FMM1 à FMM9) de la première unité de commande (CONTR1) donne un ordre à la seconde unité de commande (CONTR2) qui est traité au moyen de l'exécution de l'un des programmes d'application (AP1 à AP6) de la seconde unité de commande (CONTR2), et un résultat est renvoyé, au besoin, par l'un des programmes d'application (AP1 à AP6) de la seconde unité de commande (CONTR2) au programme d'application (FMM1 à FMM9) de la première unité de commande (CONTR1) qui a donné l'ordre, et
- la seconde unité de commande (CONTR2) présente des moyens pour la fourniture de fonctions de commutation plus complexes et pour la liaison à un système de gestion (OS).

8. Central de commutation (NE) selon la revendication 7, **caractérisé en ce que** les systèmes informatiques (CE1 à CE6) de la première unité de commande (CONTR1) sont formés de sorte qu'ils soient dédiés à la fourniture de fonctions de commutation et que les systèmes informatiques (CE7 à CE10) du second dispositif de dommande (CONTR2) soient des systèmes universels.

9. Central de commutation (NE') selon la revendication 7, **caractérisé en ce qu'**au moins un système informatique (CE3') de la première unité de commande (CONTR1') est équipé d'un dispositif d'interface pour relier la seconde unité de commande (CONTR2').

10. Système de communication doté d'un système de gestion (OS) et d'une multiplicité de centraux de commutation (NE) reliés au système de gestion (OS), **caractérisé en ce qu'**au moins un central de commutation (NE) est formé comme le central de commutation selon la revendication 7 et **en ce que** le système de gestion (OS) est relié à ce central de commutation (NE) par l'intermédiaire de la seconde unité de commande (CONTR2).

11. Système de communication selon la revendication 10, **caractérisé en ce que** le système de gestion (OS) et la seconde unité de commande (CONTR2) sont équipés de plates-formes de système d'exploitation semblables.
